# EUROPÄISCHE PATENTSCHRIFT

(11) **EP 0 354 239 B1**
(45) Veröffentlichungstag und Bekanntmachung des Hinweises auf die Patenterteilung: **11.10.1995**
(21) Anmeldenummer: 89902243.8
(22) Anmeldetag: 27.01.1989
(51) Int. Cl.: A62D 3/00, B09B 5/00

(54) **ANLAGE UND VERFAHREN ZUR REINIGUNG KONTAMINIERTER BÖDEN**
INSTALLATION AND DEVICE FOR PURIFYING CONTAMINATED SOILS
INSTALLATION ET PROCEDE DE NETTOYAGE DE SOLS CONTAMINES

(30) Priorität: 27.01.1988 DE 3802369; 08.03.1988 DE 3807487
(43) Veröffentlichungstag der Anmeldung: 14.02.1990
(73) Patentinhaber: PLAMBECK, Norbert, 27472 Cuxhaven (DE)
(72) Erfinder: PLAMBECK, Norbert, 27472 Cuxhaven (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) Internationale Anmeldenummer: EP8900075
(87) Internationale Veröffentlichungsnummer: WO8906992

(56) Entgegenhaltungen:
- EP-A- 0 161 698
- EP-A- 0 185 831
- EP-A- 0 228 626
- CA-A- 1 181 537
- DE-A- 2 724 271

## Beschreibung

Die Erfindung betrifft ein Verfahren und eine Vorrichtung zum Aufbereiten kontaminierter Böden.

Das Problem der Reinigung kontaminierter Böden hat zur Schaffung verschiedener Verfahren geführt, von denen beispielsweise die Deponierung, Verbrennung, die biologische in-situ-Behandlung, die biologische Behandlung im Beet sowie chemische Waschverfahren und Hochdruckwaschverfahren zu erwähnen sind.

Aus der EP-0 185 831 A1 ist ein Verfahren und eine Vorrichtung zum kontinuierlichen Reinigen von Boden zur Entfernung von Schadstaoffen bekannt. Bei diesem Verfahren wird zunächst eine Vorabscheidung von Steinen und Sperrgütern mit konventionellen Baumaschinen durchgeführt, wonach die Steine und Sperrgüter manuell durch Dampfstrahlreinigung von den Schadstoffen befreit werden müssen. Lediglich der übrige von Steinen und Sperrgütern befreite Boden wird einem Aufnahmetrog der Reinigungsvorrichtung zugeführt. Im Aufnahmetrog wird der Boden mit Spülwasser vermischt und anschließend wird die entstehende Schlammsuspension durch eine Rohrleitung auf einen Schwingsieb geleitet, wo die erste Stufe des eigentlichen Waschvorgangs beginnt.

Auf dem Schwingsieb werden größere Teilchen mit Spülwasser unter Hochdruck gewaschen und von den anhaftenden Schadstoffen befreit. Diese größeren Teilchen sind nach dem Waschvorgang von der Kontamination befreit und können in einem Container gesammelt werden.

Um die Kontamination auch von den kleineren Teilchen abzulösen, durchläuft die Schlammsuspension ein aufwendiges Waschsystem, in dem die Feststoffe des Bodens weiter verkleinert und durch intensiven Kontakt mit dem Spülwasser gereinigt werden. Anschließend wird die Schlammsuspension durch ein Hydrozyklon und mehrere Wellplatten- oder Parallelplattenabscheider geführt in denen eine Trennung in gereinigten Boden und kontaminiertes Spülwasser erfolgt. Der abgetrennte Feststoff wird einer Eindickvorrichtung mit Förderschnecke zugeführt, in der eine weitere Entwässerung des Feststoffes erfolgt.

Ein weiteres Verfahren zur Reinigung und Dekontaminierung von Böden ist in der EP-A-0 161 698 A1 beschrieben. Bei diesem Verfahren wird der kontaminierte Boden mit Wasser eines bestimmten, von der Kontamination abhängigen pH-Wertes vermischt und die Kontamination von dem Bodenmaterial durch eine Waschvorrichtung bestehend aus einem Schrubber mit Rührer abgerieben. Um eine ausreichende Reinigung des Bodenmaterials zu erreichen, wird der pH-Wert des Waschwassers während des gesamten Reinigungsvorganges auf dem bestimmten, von der Art der Kontamination abhängigen pH-Wert gehalten.

Da grobes Material, wie beispielsweise Kies, Geröll oder Bauschutt einen nachteiligen Einfluß auf die Wirkungsweise des Schrubbers haben und insbesondere zu einer vorzeitigen Abnutzung oder sogar Zerstörung des Schrubbers bzw. des Rühres führen kann, muß das grobe Material von dem Bodenmaterial getrennt werden, bevor dieses mit dem Schrubber gereinigt werden kann.

Nach dem intensiven Waschvorgang mit dem Schrubber wird die Mischung aus teilweise gereinigtem Bodenmaterial und Flüssigkeit in einen Behälter überführt, in dem sie mit Wasser verdünnt wird, um so eine Suspension zu schaffen, welche zur weiteren Verarbeitung geeignet ist. Durch Zuführung von chemischen Mitteln werden die in der Suspension vorhandenen Schadstoffe oxidiert und in einem abschließenden Verfahrensschritt das gereinigte Bodenmaterial von der Suspension getrennt.

Alle diese Verfahren sind mit spezifischen Nachteilen behaftet, erfordern teilweise erhebliche gerätetechnischen Aufwand sowie eine aufwendige Aussortierung und Spezialbehandlung von groben Materialien, wie beispielsweise Kies, Geröll oder Bauschutt und liefern oft keine eindeutig vorhersehbaren Ergebnisse. Außerdem führen diese bekannten Verfahren häufig wiederum zu Umweltbelastungen und auch zu beträchtlichen Mengen an kritischem Deponiegut.

Aufgabe der Erfindung ist es, eine Anlage zur Reinigung kontaminierter Böden der eingangs angegebenen Art zu schaffen, die sich durch besondere Wirtschaftlichkeit, Mobilität und Effektivität auszeichnet, für unterschiedlichste Arten von kontaminierten Böden geeignet ist und praktisch unter Vermeidung von zu deponierenden Stoffen innerhalb vergleichsweise kurzer Zeit die Wiederherstellung brauchbarer Böden gestattet. Ferner soll ein insbesondere in Verbindung mit dieser Anlage verwendbares verbessertes Aufbereitungsverfahren geschaffen werden.

Gelöst wird der das Verfahren betreffende Teil dieser Aufgabe durch die Merkmale des Anspruchs 1 und der die Anlage betreffende Teil durch die Merkmale des Anspruchs 3.

Erfindungsgemäß ausgebildete Anlagen können auf der Basis einer einfachen, robusten und zuverlässigen Technik erstellt werden und gestatten es, Böden unterschiedlicher Art beispielsweise von Öl, Benzin, Kerosin, Diesel, Heizöl und polyzyklischen aromatischen Kohlenwasserstoffen insbesondere vor Ort zu reinigen, wobei vor allem der Boden nicht chemisch oder thermisch abgetötet, sondern sofort wieder verwendet werden kann. Der Einsatz erfindungsgemäßer Anlagen gestattet es, Deponieraum zu schonen, weitere Umweltbelastungen zu vermeiden und den revitalisierten Boden praktisch sofort wieder zu verwenden. Die erzielbare Reinigungsleistung hängt dabei von der maschinellen Ausstattung ab, aber es ist ohne weiteres auch in Verbindung mit einer mobilen Anlage eine Leistung von etwa 100 bis 150 t pro Arbeitstag erreichbar.

Durch die Verwendung von Wirksubstanzen, die die Kontamination dispergieren, wird ein schneller Abbau dieser Kontaminationssubstanzen begünstigt. Dieser Abbau wird dadurch optimiert, daß das mit Wasser vermischte und mit den Wirksubstanzen versehene Bodengemisch erwärmt wird, wodurch die Reaktionen beschleunigt werden. Durch die Erwärmung des Bodengemisches im Mischer wird auch das Bakterienleben begünstigt, was zusätzlich zu einer Beschleunigung des Abbaus der Kontaminationssubstanzen und zur Eigenregeneration des Bodens beiträgt. Der ständige Mischvorgang gewährleistet dabei einen intensiven und gleichmäßigen Eintrag von Sauerstoff in das Bodengemisch.

Besonders vorteilhafte Ausgestaltungen der Erfindung sind in den Unteransprüchen angegeben.

Die Erfindung wird nachfolgend beispielsweise unter Bezugnahme auf die Zeichnung erläutert; in der Zeichnung zeigt:
- Fig. 1: eine schematische Draufsicht einer gemäß der Erfindung ausgebildeten Anlage zur Reinigung kontaminierter Böden,
- Fig. 2: eine schematische Darstellung einer Kieswaschstufe der Anlage nach Fig. 1,
- Fig. 3: eine schematische Darstellung einer Sandwaschstufe der Anlage nach Fig. 1,
- Fig. 4: eine schematische Darstellung einer Schlammseparationsstufe der Anlage nach Fig. 1,
- Fig. 5: eine schematische Darstellung zur Erläuterung einer im Zusammenhang mit der Anlage in der Fig. 1 verwendbaren biologischen Aufbereitung,
- Fig. 6: den ersten Verfahrensschritt zur Aufbereitung kontaminierter Böden (Bodenaufbereitung),
- Fig. 7: den zweiten Verfahrensschritt (Bodenbehandlung) und
- Fig. 8: den dritten Verfahrensschritt (Entleerung des gereinigten Bodens).

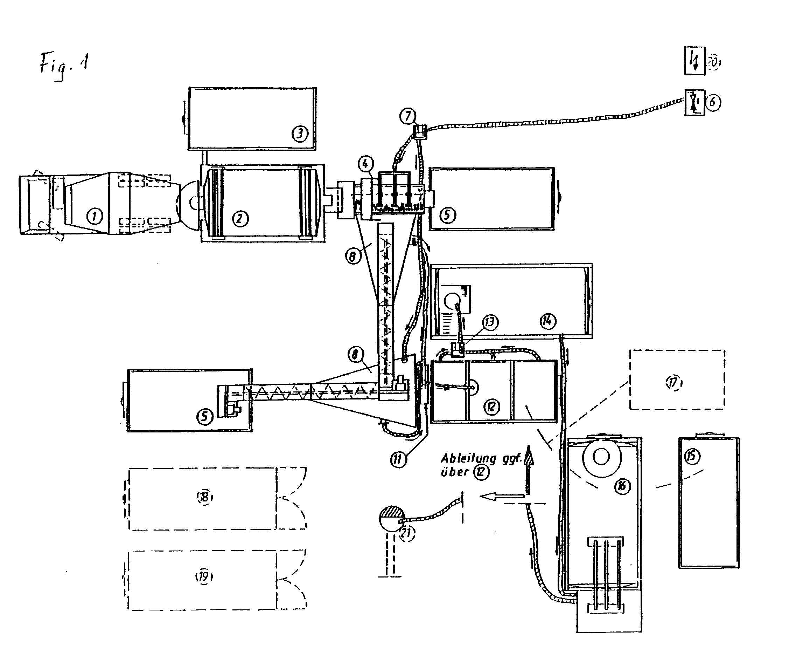

Nach Fig. 1 ist ein auf einem Fahrzeug montierter spezialisierter Freifallmischer 1 vorgesehen, aus dem das zu reinigende Material einer Grobkornwaschtrommel 2 zugeführt wird.

Dieser mobile Freifallmischer 1 wird an dem zu sanierenden Ort mit dem kontaminierten Boden, welcher mittels Bagger oder dergleichen ausgehoben wird, beschickt, wobei keine besondere Vorsortierung erforderlich ist, da Steine und eine gewisse Größenabmessung nicht überschreitender Unrat problemfrei mitverarbeitet werden kann.

In dem rotierenden Freifallmischer werden dem kontaminierten Boden Klarwasser und ein einen neutralen ph-Wert aufweisender Wirkstoff sowie zum Abbau der Kontamination geeignete und auch den Wirkstoff als Nahrungsmittel akzeptierende Bakterien beigegeben, wobei die Klarwassermenge so gewählt wird, daß im Freifallmischer ein fließfähiges Gemisch entsteht.

Bereits im Freifallmischer werden Bakterien und Wirkstoffe sehr gut verteilt, so daß bereits ein wesentliches Ablösen der Kontamination von den Teilchen des Erdreichs auftritt und auch die Bakterien direkt oder über den Wirkstoff zu den abzubauenden Verunreinigungen gelangen können.

Die in Fig. 1 gezeigte Grobkornwaschtrommel wird vor allem bei grobkiesartigen Böden verwendet, ist aber bei anderen Bodenarten, insbesondere bei ausschließlich feinsandigen Bodenarten nicht erforderlich.

Dieser Grobkornwaschtrommel ist ein Absetzbecken 3 zugeordnet, in das das in der Grobkornwaschtrommel 2 abgetrennte Öl-Wassergemisch zusammen mit Schwebstoffanteilen gelangt, wo eine biologische Aufbereitung erfolgen kann.

Entweder direkt aus dem Freifallmischer 1 oder über die Grobkornwaschtrommel 2 gelangt das fließfähige kontaminierte Material auf einen Schwingsiebwäscher 4, der mit einer mit Klarwasser gespeisten Beduschungseinrichtung versehen ist.

Mittels dieses für die erfindungsgemäße Anlage wesentlichen Schwingsiebwäschers 4, welcher ein sehr feinmaschiges Sieb besitzt, gelingt es, eine Trennung des zugeführten Materials dergestalt vorzunehmen, daß die grobkörnigeren Bodenanteile bereits in gereinigter Form unmittelbar in einen Container 5 überführt werden können, während die die Kontamination mit sich führenden feinteiligen Anteile und die Wasserphase durch das in einer ausgesprochenen Naßphase arbeitende Schwingsieb zu einer Waschschnecke 8 gelangen.

Im dargestellten Ausführungsbeispiel sind zwei Waschschnecken 8 in Reihe geschaltet, wobei diese Waschschnecken einander entsprechend aufgebaut sind und jeweils einen trogförmigen Behälter umfassen, aus dem sich die rotierende Förderschnecke schräg nach oben erstreckt.

In diesen Waschschnecken 8 erfolgt besonders ausgeprägt ein Auswaschen der Sandanteile, wobei nicht nur im Trogbereich, sondern auch im Bereich des oberen Endes der Schnecke eine Klarwasserzuführung erfolgen kann, so daß der angestrebte Auswaschvorgang möglichst ausgeprägt ist.

Das Abgabeende der ersten Förderschnecke 8 führt im dargestellten Ausführungsbeispiel zum Aufgabeende der zweiten Förderschnecke 8, und deren Abgabeende mündet über einem Container 5 für gereinigten Boden.

Durch das Zusammenwirken von Schwingsiebwäscher 4 und Waschschnecken 8 gelingt es, die jeweilige Kontamination praktisch vollständig in die wässerige Phase zu überführen, und diese stark verunreinigte wässerige Phase wird aus den Trogbereichen der Waschschnecken 8 über entsprechende Leitungen und unter Zwischenschaltung einer Schmutzwasserpumpe 11 einem Entwässerungscontainer 12 zugeführt.

Dieser Container 12 ist vorzugsweise als doppelwandiger Container ausgebildet, wobei die Innenwand zumindest bodenseitig siebartig ausgeführt ist. Das Waschwasser mit der Kontamination und Schwebstoffanteilen, das in den Entwässerungscontainer 12 gelangt, wird dort ausgeflockt, worauf bodenseitig über eine Pumpe 13 praktisch Klarwasser abgezogen und in einen Wasservorratsbehälter geleitet bzw. als Waschwasser wieder in den Kreislauf zurückgeführt werden kann. Auf diese Weise wird das erforderliche Waschwasser auf eine Mindestmenge begrenzt.

Der stark kontaminierte Schlamm, in dem sich der größte Teil der ursprünglich im kontaminierten Boden vorhandenen Schadstoffe befinden, wird vorzugsweise kontinuierlich in einen Bioreaktor 16 überführt. Zu erwähnen ist dabei, daß die im Freifallmischer zugegebenen Bakterien während des gesamten geschilderten Verfahrensablaufs bereits ihre Wirksamkeit entfalten können und auch in den Bioreaktor 16 gelangen.

Durch ideale Lebensbedingungen bei ca. 35°C und geregelter Sauerstoffzufuhr kann im Bioreaktor die Kontamination bereits in den ersten 24 Stunden um etwa 90 % durch die vorhandenen Mikroorganismen zu Kohldyoxid und Wasser veratmet werden. Nach Erreichen der geforderten Abbauleistung wird das Wasser vorzugsweise über einen Entwässerungscontainer von dem Belebschlamm getrennt und kann dann in die Kanalisation eingeleitet werden. Der Belebschlamm kann in den gereinigten Boden wieder eingemischt oder anderweitig verwendet werden.

In Fig. 1 ist eine Steuereinrichtung für den Wasserzulauf mit 6 bezeichnet und ein schematisch dargestellter, benötigter Elektroanschluß besitzt das Bezugszeichen 20.

Die Überführung von Schlamm zwischen Entwässerungscontainer 12, Bioreaktor 16 und einem Lagerbehälter 15 für belasteten Schlamm kann mittels eines Mobilbaggers 17 erfolgen. Mit 21 ist ein zu einem Vorfluter im Kanalnetz führender Schmutzwasserablauf aus dem Bioreaktor 16 gekennzeichnet, und ferner sind zur Darstellung des Gesamtsystems noch ein Laborcontainer 18 und ein Aufenthaltungscontainer 19 in der Fig. 1 angedeutet dargestellt.

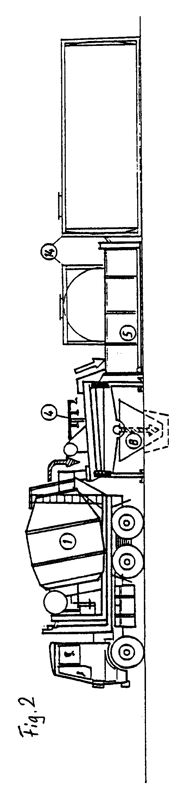

Zur Veranschaulichung des kompakten Aufbaus einer Anlage nach der Erfindung werden verschiedene Stufen dieser Anlage nochmals detailiert in den Fig. 2 bis 5 gezeigt.

Fig. 2 zeigt den fahrbaren Freifallmischer 1 während der Beschickung des mit einer Beduschungsanlage ausgestatteten Schwingsiebwäschers 4.

Die bereits von den Verunreinigungen befreiten Bestandteile des zu reinigenden Bodens gelangen unmittelbar vom Schwingsiebwäscher 4 in einen Container 5, der im gefüllten Zustand abtransportiert und durch einen anderen Container ersetzt werden kann.

Die durch das feinmaschige Schwingsieb gelangenden Teile und insbesondere die kontaminierte flüssige Phase werden - wie bereits anhand der Fig. 1 erläutert - dem vorzugsweise in einer ausgehobenen Grube angeordneten Trogteil der nachfolgenden Waschschecke 8 zugeführt.

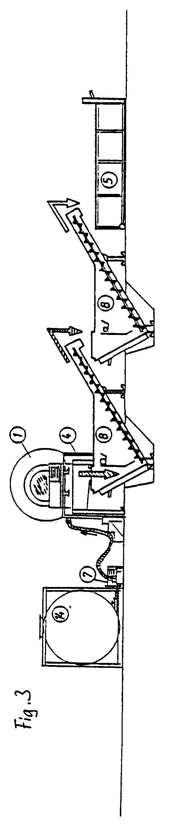

Fig. 3 zeigt die Serienschaltung zweier Sandwaschschnecken 8 in Verbindung mit dem Schwingsiebwäscher 4. Das für die Beduschungseinrichtung am Schwingsiebwäscher 4 erforderliche Wasser wird vorzugsweise über eine Pumpe mit Verteiler 7 aus dem Wasservorratsbehälter 14 abgezogen.

Die Neigung der Sandwaschschnecken kann ggf. variiert werden, um auf diese Weise Verweildauer und Strömungsgeschwindigkeit des ggf. endseitig zugeführten Waschwassers zu beinflussen. Die gereinigten Festbestandteile gelangen von den Sandwaschschnecken 8 in einen Container 5.

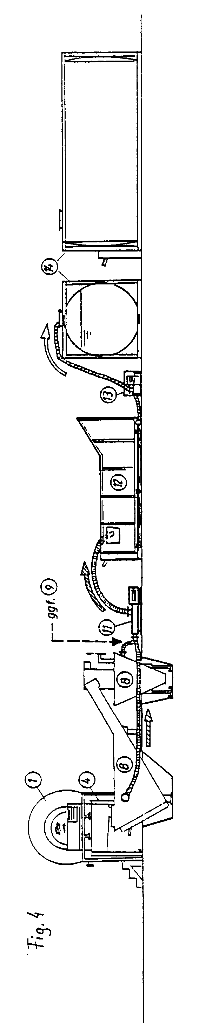

Fig. 4 zeigt die Weiterverarbeitung der in den Waschschnecken 8 anfallenden, stark kontaminierten Flüssigphase, die aus den oberen Bereichen der Waschschneckentröge über eine Schmutzwasserpumpe 11 abgezogen und in den Entwässerungscontainer 12 überführt werden. Ggf. kann die stark kontaminierte Flüssigphase nach Abzug aus den Waschschnecken über einen Hydrozyklon 9 geleitet werden.

Wie bereits anhand der Fig. 1 erläutert, gelangt das im Entwässerungscontainer 12 anfallende Klarwasser über eine entsprechende Förderpumpe 13 in den Wasservorratsbehälter 14.

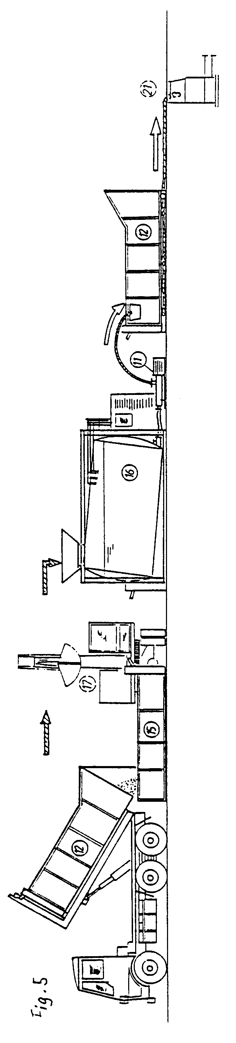

Fig. 5 zeigt die biologische Aufbereitung der im Entwässerungscontainer 12 anfallenden, stark kontaminierten Feststoffe, wobei wesentlich ist, daß der Anteil dieser Feststoffe bezogen auf das ursprünglich zu reinigende Gesamtmaterial sehr gering ist und beispielsweise 1 % bis 5 % dieses Gesamtmaterials beträgt. Zweckmäßigerweise werden diese Feststoffe aus dem Entwässerungscontainer 12 zunächst in einen Lagerbehälter 15 für belasteten Schlamm gekippt und von dort mittels eines Mobilbaggers 17 in einen Bioreaktor 16 eingebracht. Auf den Bioreaktor folgt wiederum ein Entwässerungscontainer 12 für die mittels einer Pumpe 11 bodenseitig abgezogenen Bestandteile, so daß nach entsprechender Ausflockung das im Entwässerungscontainer 12 bodenseitig anfallende Schmutzwasser direkt in den Vorfluter 21 eines Kanalnetzes geleitet werden kann.

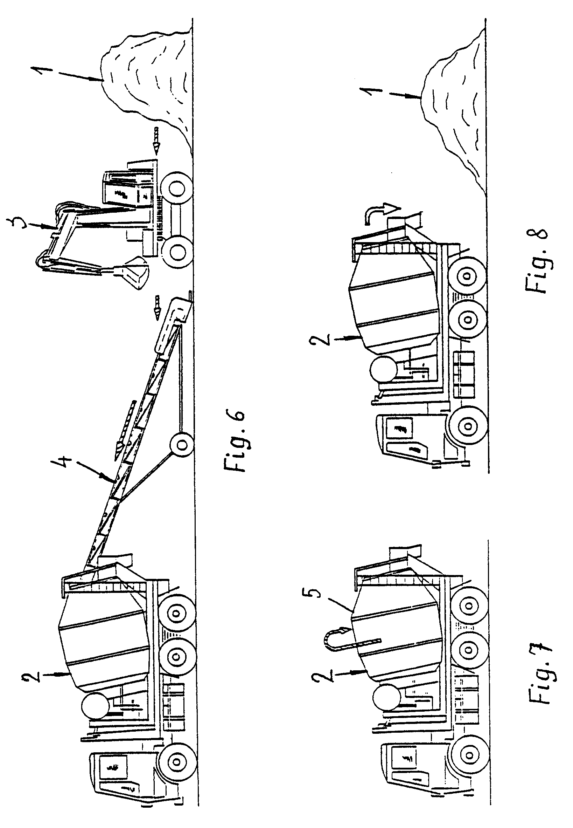

Gemäß Figur 6 wird kontaminierter Boden (1) mittels eines Baggers (3) auf ein Förderband (4) gebracht und von diesem in einen fahrbaren Mischer (4) gefördert. Bei diesem Mischer kann es sich beispielsweise um einen Lastkraftwagen handeln, wie er zum Mischen und Befördern von Beton verwendet wird. Im Mischer wird der kontaminierte Boden mit einer Wirksubstanz vermischt, die das Bakterienleben begünstigt und für diese Nahrungsmitteleigenschaften besitzt. Die Wirksubstanz besitzt zudem die weitere Eigenschaft, daß sie die Kontaminationssubstanzen dispergiert, so daß die Angriffsfläche für die Bakterien vergrößert wird und dadurch der Abbau der Kontaminationssubstanzen beschleunigt wird.

Je nach Höhe der Kontamination des Bodens wird auch eine mehr oder weniger große Menge an selektierten Hochleistungsbakterien dem kontaminierten Boden zugegeben, die die Regeneration des Bodens unterstützen.

Aus Figur 7 ist der zweite Verfahrensschritt der Bodenbehandlung ersichtlich. Der mit Wasser, der Wirksubstanz und ggfs. den selektierten Hochleistungsbaktieren vermischte kontaminierte Boden bildet ein fließfähiges Bodengemisch, das durch Umdrehung der Mischtrommel (5) des Mischers (2) intensiv vermischt wird. Durch Zuführung von Warmluft wird das Bodengemisch nun auf eine Temperatur von 25 bis 35 Grad Celsius gebracht und je nach Höhe der Eingangsbelastung 4 bis 24 Stunden intensiv durchgemischt. Dieser ständige Mischvorgang gewährleistet bis zum endgültigen biologischen Abbau der Kontaminationssubstanzen den notwendigen Sauerstoffeintrag.

Nach dem endgültigen Abbau der Kontaminationssubstanzen wird der aufbereitete Boden (1) entsprechend Figur 8 aus dem Mischer (2) entleert und steht zur weiteren Verwendung bereit.

## Patentansprüche

1. Verfahren zum Aufbereiten kontaminierter Böden,
bei dem der kontaminierte Boden in einen Freifallmischer (1), insbesondere einen nach Art eines Betonmischers ausgebildeten Freifallmischer (1) eingebracht und durch Zugabe von Klarwasser und zum Abbau der Kontamination geeigneter Wirkstoffe im Freifallmischer (1) ein fließfähiges Gemisch gebildet und bereits im Freifallmischer (1) ein wesentliches Ablösen der Kontamination von den Teilchen des Erdreichs bewirkt wird,
worauf das fließfähige Material auf einen Schwingsiebwäscher (4) aufgebracht, gewaschen und derart getrennt wird, daß die grobkörnigen Bodenanteile bereits in gereinigter Form abgeführt werden können, während die die Kontamination mit sich führenden feinteiligen Anteile und die Wasserphase durch das Schwingsieb (4) zu einer Waschschnecke (8) gelangen, in der ein ausgeprägtes Auswaschen der Sandteile erfolgt,
und die durch das Zusammenwirken von Schwingsiebwäscher (4) und Waschschnecke (8) praktisch vollständig in die wässerige Phase überführte Kontamination in einen Container (12) überführt wird.

2. Verfahren nach Anspruch 1,
dadurch **gekennzeichnet,**
daß zu dem fließfähigen Gemisch im Freifallmischer (1) selektierte Hochleistungsbakterien hinzugefügt werden, daß die zum Abbau der Kontamination geeigneten Wirkstoffe eine das Bakterienleben begünstigende, für die Bakterien Nahrungsmitteleigenschaften besitzende und die Kontamination dispergierende Wirksubstanz umfassen, daß der vorbehandelte Boden im Freifallmischer auf 25 bis 35°C erwärmt wird und daß die den Sauerstoffeintrag gewährleistende Mischbewegung bis zum endgültigen Abbau der Kontamination fortgeführt wird.

3. Anlage zur Durchführung des Verfahrens nach Anspruch 1 mit einem insbesondere nach Art eines Betonmischers ausgebildeten und mit dem kontaminierten Boden sowie Klarwasser und zum Abbau der Kontamination geeigneten Wirkstoffen beschickbaren Freifallmischer (1) zur Bildung eines fließfähigen Gemisches und zur wesentlichen Ablösung der Kontamination von den Teilchen des Erdreichs, mit einem Schwingsiebwäscher (4) zum Waschen und Trennen des fließfähigen Materials, demeine Einrichtung zur Klarwasserbeduschung des aufgegebenen, sich bereits in der fließfähigen Phase befindenden Bodenmaterials zugeordnet ist, mit zumindest einer dem Schwingsiebwäscher (4) nachgeschalteten Waschschnecke (8) zum ausgeprägten Auswaschen der Sandteile und mit einem Container (12) zum Aufnehmen der durch das Zusammenwirken von Schwingsiebwäscher (4) und Waschschnecke (8) praktisch vollständig in die wässerige Phase überführten Kontamination.

4. Anlage nach Anspruch 3,
dadurch **gekennzeichnet,**
daß die Waschschnecke (8) einen Aufnahmetrog und eine sich ausgehend vom Trogbodenbereich schräg nach oben zu einem Feststoffabgabeende erstreckende Förderschnecke umfaßt, wobei im oberen Trogbereich ein Anschluß zum Abzug von kontaminiertem Waschwasser vorgesehen ist.

5. Anlage nach Anspruch 4,
dadurch **gekennzeichnet,**
daß zumindest zwei Waschschnecken (8) in Reihe geschaltet sind.

6. Anlage nach einem der Ansprüche 3 bis 5,
dadurch **gekennzeichnet,**
daß der Container (12) als zumindest bereichsweise doppelwandiger Behälter mit bodenseitigem Klarwasserabzug ausgebildet ist, wobei zumindest bodenseitige Bereiche der innenliegenden Wandung siebartig ausgebildet sind und der bodenseitige Klarwasserabzug in einem Klarwasser-Vorratsbehälter (14) mündet.

7. Anlage nach Anspruch 6,
dadurch **gekennzeichnet,**
daß an den Klarwasser-Vorratsbehälter (14) Speiseleitungen zur Zuführung von Klarwasser zu dem Schwingsiebwäscher (4) und/oder zu den Waschschnecken (8) anschließbar sind.

8. Anlage nach einem der Ansprüche 3 bis 7,
dadurch **gekennzeichnet,**
daß der im Container (12) anfallende Feststoff in einen Bioreaktor (16) überführt wird, dem insbesondere ein weiterer Container (12) zur Aufnahme der im Bioreaktor (16) anfallenden, Feinstoffe enthaltenden Flüssigphase nachgeschaltet ist.

9. Anlage nach einem der Ansprüche 3 bis 8,
dadurch **gekennzeichnet,**
daß jeder Container (12) mit Flockungsmittel beschickbar ist.

10. Anlage nach einem der Ansprüche 3 bis 9,
dadurch **gekennzeichnet,**
daß die dem Freifallmischer (1) zugegebenen Wirkstoffe einen neutralen pH-Wert besitzen und für gleichzeitig zugeführte Bakterien Nahrungsmittelfunktion besitzen.

11. Anlage nach einem der Ansprüche 3 bis 10,
dadurch **gekennzeichnet,**
daß der Schwingsiebwäscher (4) über eine Grobkornwaschtrommel (2) vom Mischer (1) beschickt wird, und daß der Grobkornwaschtrommel (2) ein Absetzbecken (3) zur Aufnahme eines anfallenden Öl-Wasser-Gemisches mit Schwebstoffanteilen zugeordnet ist, wobei dieses Absetzbecken (3) wiederum einer biologischen Aufbereitung vorgeschaltet ist.

## Claims

1. Method for processing contaminated ground in which the contaminated ground is introduced into a gravity mixer (1), in particular a gravity mixer (1) formed in the manner of a concrete mixer, a free-flowing mixture being formed in the gravity mixer (1) via the addition of clean water and of an active agent suitable for the breakdown of the contamination, wherein a substantial separation of the contamination from the earth particles already takes place in the gravity mixer (1), whereupon the free-flowing material is brought onto a shaking screen washer (4), washed, and separated out such that the course-grained components of the earth can already be separated off in cleansed form, whilst the fine particle components, which are carrying the contamination, as well as the agueous phase pass through the shaking screen (4) to a washing screw (8) in which a pronounced washing out of the sand particles takes place, and the contamination, which has been practically completely carried over into the agueous phase as a result of the combined action of the shaking screen washer (4) and the washing screw (8), is passed into a container (12).

2. Method in accordance with claim 1, characterised in that selected high-power bacteria are added to the free-flowing mixture in the gravity mixer (1), in that the active agents suitable for the breakdown of the contamination includes an active substance which disperses the contamination, which possesses nutrient properties for the bacteria and which promotes the bacterial life, in that the pretreated earth is heated to between 25 and 35°C in the gravity mixer, and in that the mixing movement, which provides the supply of oxygen, is continued with until final breakdown of the contamination.

3. Plant for implementing the method of claim 1 comprising a gravity mixer (1) for forming a free-flowing mixture and for substantially separating off the contamination from the earth particles, with the gravity mixer (1) being formed in particular in the manner of a concrete mixture and being chargeable with the contaminated earth as well as clean water and active agents suitable for the breakdown of the contamination; a shaking screen washer (4) for washing and separating out the free-flowing material, with the shaking screen washer (4) having associated with it an apparatus for sprinkling the earth to be processed, which is already in the free-flowing phase, with clean water; at least one washing screw (8) placed subsequent to the shaking screen washer (4) and provided for pronounced washing out of the sand particles; and a container (12) for receiving the contamination, the contamination having been practically completely carried over into the aqueous phase as a result of the combined action of the shaking screen washer (4) and the washing screw (8).

4. Plant in accordance with claim 3, characterised in that the washing screw (8) comprises a receiving trough and a conveyor screw, the conveyor screw extending from the base region of the trough in an inclined upward direction to a material delivery end, a connection being provided in the upper region of the trough for taking off the contaminated washing water.

5. Plant in accordance with claim 4, characterised in that at least two washing screws (8) are connected in series.

6. Plant in accordance with one of claims 3 to 5, characterised in that the container (12) is formed as a container with a clean water drain on its base side and in that the container is double-walled, at least in some regions, wherein regions of the inner lying wall are screen-like or sieve-like, at least on the base side, and wherein the base-side clean water drain opens out into a clean water supply container (14).

7. Plant in accordance with claim 6, characterised in that feedlines for the supply of clean water to the shaking screen washer (4) and/or to the washing screw (8) are connectable to the clean water supply container (14).

8. Plant in accordance with one of the claims 3 to 7, characterised in that the material arising in the container (12) is passed into a bioreactor (16) and in that, in particular, a further container (12) is connected thereafter for receiving the fine-particle containing liquid phase arising in the bioreactor (16).

9. Plant in accordance with one of claims 3 to 8, characterised in that each container (12) can be loaded with flocculator.

10. Plant in accordance with one of claims 3 to 9, characterised in that the active agents added to the gravity mixer (1) possess a neutral pH value and possess a nutrient function for the bacteria added at the same time.

11. Plant in accordance with one of claims 3 to 10, characterised in that the shaking screen washer (4) is loaded from the mixer (1) via a coarse-grain washing drum (2) and in that the coarse-grain washing drum (2) is associated with a sedimentation basin (3) for receiving the oil-water mixture arising which contains components of suspended matter, wherein a biological processing means is placed before this sedimentation basin (3).

## Revendications

1. Procédé de nettoyage de sols contaminés, dans lequel le sol contaminé est introduit dans un mélangeur à chute libre (1), en particulier un mélangeur à chute libre (1) réalisé à la façon d'un malaxeur à béton, et par addition d'eau claire et de substances actives appropriées dans le but de neutraliser la contamination, il est constitué dans le mélangeur à chute libre (1) un mélange fluide et il est déjà provoqué dans le mélangeur à chute libre (1) une désolidarisation notable de la contamination vis-à-vis des particules du sol, suite à quoi le matériau fluide est appliqué sur un laveur à taais vibrant (4), lavé, et séparé de manière que les parties du sol à gros grain puissent déjà être séparées sous une forme épurée, tandis que les parties à grain fin qui véhiculent avec elles la contamination et la phase aqueuse arrivent, à travers le tamis vibrant (4) à une vis de lavage (8), dans laquelle s'effectue un nettoyage accentué par lavage des parties sableuses, et la contamination, pratiquement complètement entraînée dans la phase aqueuse par la coopération du laveur à tamis vibrant (4) et de la vis de lavage (8), est transférée dans un conteneur (12).

2. Procédé selon la revendication 1, caractérisé en ce que des bactéries à hautes performances sélectionnées sont ajoutées au mélange fluide se trouvant dans le mélangeur à chute libre (1), en ce que les substances actives convenant pour détruire la contamination comprennent une substance active favorisant la vie bactérienne, ayant des propriétés de produit nutritif pour les bactéries et exerçant un effet dispersant sur la contamination, en ce que le sol prétraité est chauffé dans le mélangeur à chute libre jusqu'à une température de 25 à 35 °C et en ce que le mouvement de mélange assurant l'introduction d'oxygène est continué jusqu'à destruction finale de la contamination.

3. Installation pour mettre en oeuvre le procédé selon la revendication 1, avec un mélangeur à chute libre (1) réalisé en particulier à la façon d'un malaxeur à béton et pouvant être chargé avec le sol contaminé, ainsi qu'avec de l'eau claire, et avec des substances actives convenant pour la destruction de la contamination, pour constituer un mélange fluide et pour notablement désolidariser la contamination vis-à-vis des particules du sol, avec un laveur à tamis vibrant (4) pour le lavage et la séparation du matériau fluide, auquel est associé un dispositif d'aspersion par arrosage avec de l'eau claire du matériau constituant le sol introduit et se trouvant déjà dans la phase fluide, avec au moins une vis de lavage (8) mise eu circuit en aval du laveur à tamis vibrant (4), pour obtenir un nettoyage accentué par lavage des parties de sable, et avec un conteneur (12) destiné à recevoir la contamination qui a pratiquement été complètement transférée dans la phase aqueuse, suite à là coopération du laveur à tamis vibrant (4) et de la vis de lavage (8).

4. Installation selon la revendication 3, caractérisée en ce que la vis de lavage (8) comprend une auge de réception et une vis de transfert s'étendant, en partant de la zone du fond de l'auge, obliquement vers le haut en direction d'une extrémité d'évacuation de solides, un raccordement destine à l'extraction de l'eau de lavage contaminée étant prévu dans la zone supérieure de l'auge.

5. Installation selon la revendication 4, caractérisée en ce qu'au moins deux vis de lavage (8) sont montés en circuit en série.

6. Installation selon l'une des revendications 3 à 5, caractérisée en ce que le conteneur (12) est réalisé sous forme de récipient ayant au moins par zones une double paroi, avec une extraction de l'eau claire du côté du fond, au moins des zones situées du côté du fond de la paroi intérieure étant réalisées à la façon de tamis et l'extraction, côté fond, de l'eau claire débouchant dans un récipient de stockage d'eau claire (14).

7. Installation selon la revendication 6, caractérisée en ce que des conduites d'alimentation, destinées à l'amenée d'eau claire au laveur à tamis vibrant (4) et/ou aux vis de lavage peuvent être raccordées au récipient de stockage d'eau claire (14).

8. Installation selon l'une des revendications 3 à 7, caractérisée en ce que les solides produits dans le conteneur (12) sont transférés dans un bioréacteur (16), en aval duquel en particulier est mis en circuit un autre conteneur (12) destiné à recevoir la phase liquide produite dans le bioréacteur (16) et contenant des fines.

9. Installation selon l'une des revendications 3 à 8, caractérisée en ce que chaque conteneur (12) peut être chargé avec un agent floculant.

10. Installation selon l'une des revendications 3 à 9, caractérisée en ce que les substances actives ajoutées au mélangeur à chute libre (1) ont un pH neutre et ont une fonction de produit nutritif pour des bactéries amenées simultanément.

11. Installation selon l'une des revendications 3 à 10, caractérisée en ce que le laveur à tamis vibrant (4) est alimenté par l'intermédiaire d'un tambour de lavage pour gros grains (2), depuis le mélangeur (1) et en ce qu'au tambour pour lavage pour gros grains (2) est associé un bassin de décantation (3) destiné à recevoir un mélange eau-huile produit et contenant des composants flottants, ce bassin de décantation (3) étant à son tour mis en amont d'une installation de préparation biologique.
